# EUROPÄISCHE PATENTSCHRIFT

(11) **EP 2 531 903 B1**
(45) Veröffentlichungstag und Bekanntmachung des Hinweises auf die Patenterteilung: **19.03.2014**
(21) Anmeldenummer: 11705152.4
(22) Anmeldetag: 28.01.2011
(51) Int. Cl.: G06F 3/041

(54) **BILDSCHIRMEINHEIT MIT EINEM TASTSCHIRM**
DISPLAY UNIT MIT TOUCH SCREEN
UNITÉ D'AFFICHAGE AVEC ÉCRAN TACTILE

(30) Priorität: 13.04.2010 DE 102010014796; 03.02.2010 DE 102010006721
(43) Veröffentlichungstag der Anmeldung: 12.12.2012
(73) Patentinhaber: Rohde & Schwarz GmbH & Co. KG, 81671 München (DE); Glyn Jones GmbH & Co. Vertrieb von Elektronischen Bauelementen KG, 65510 Idstein (DE)
(72) Erfinder: FUCHS, Hans-Peter, 85551 Kirchheim (DE); KRAUSE, Manuel, 65527 Niedernhausen (DE); KLEIST, Paul, Kaohsiung 80600 (TW)
(74) Vertreter: Körfer, Thomas
(86) Internationale Anmeldenummer: PCT/EP2011/000411
(87) Internationale Veröffentlichungsnummer: WO 2011/095310

(56) Entgegenhaltungen:
- EP-A2- 1 710 671
- EP-A2- 2 045 698
- US-A- 6 160 701
- US-A1- 2005 219 269
- 4D SYSTEMS: "ìLCD-32032-P1T", USERS MANUAL,, Nr. Revision 1.1, 1. Januar 2008 (2008-01-01), Seiten 1-16, XP007918308,
- MICROCHIP TECHNOLOGY: "TSHARC Octopus Touch Screen Controller Supports 4-, 5- & 8-Wire Analog Resistive Touch Screens RS-232, PS/2, USB", SETUP AND USERS MANUAL,, Nr. version 1.6R, 27. August 2009 (2009-08-27), Seiten 1-15, XP007918310,
- HAMPSHIRE CO: "TSHARC Devil-Ray Auto Detect 4, 5 & 8 Wire Analog Resistive Touch Screen Controller Board (Auto Detect RS-232 and USB)", SETUP AND USERS MANUAL,, Nr. version 1.5, 7. August 2007 (2007-08-07), Seiten 1-13, XP007918309,

## Beschreibung

Die Erfindung betrifft eine Bildschirmeinheit, insbesondere eine TFT-Bildschirmeinheit (engl. thin film transistor; dt. Dünnschichttransistor), mit einem auf die Bildschirmeinheit aufgebrachten Tastschirm (engl. touch panel oder touchscreen), wie sie als solches bereits bekannt sind. Diese auf die Bildschirmeinheiten aufgebrachten Tastschirme erleichtern einerseits die Eingabe von Daten, sowie die Navigation durch verschiedene Bildschirmmasken und andererseits kann auf zusätzliche Eingabegeräte verzichtet werden, für deren Anbringung sehr oft keinerlei Platz mehr am Gerät verfügbar ist. Die Bildschirmmasken können dabei weiterhin einfach geändert werden, ohne Rücksicht auf die Anordnung der Bedienknöpfe nehmen zu müssen.

Dabei wird meistens ein Tastschirm auf eine herkömmliche Bildschirmeinheit aufgeklebt. Sowohl Tastschirm, als auch die Bildschirmeinheit werden anschließend mit je einem eigenen Kabel mit einem Computersystem verbunden. Der Tastschirm wird dabei allerdings über einen separaten Tastschirmkontroller (engl. touch panel controller) mit dem Computersystem verbunden. Zusätzlich ist die Bildschirmeinheit noch über ein weiteres Kabel mit dem elektrischen Versorgungsnetz verbunden, so dass letztendlich drei Verbindungskabel und ein separater Tastschirmkontroller notwendig sind und angeschlossen werden müssen.

Aus der EP 1 507 253 A2 ist ein Anzeigeadapter bekannt, der zwischen eine Grafikkarte und einen LCD-Bildschirm (engl. liquid crystal display; dt. Flüssigkristallbildschirm) geschaltet ist. Auf dem Anzeigeadapter sind bestimmte Bausteine integriert, mit deren Hilfe der angeschlossene Bildschirm automatisch von der Grafikkarte erkannt werden kann. Über die Verbindung zwischen Grafikkarte und Anzeigeadapter können weitere Befehle übertragen werden, die dazu verwendet werden, um z.B. die Hintergrundbeleuchtung des LCD-Bildschirms auszuschalten.

Nachteilig an der EP 1 507 253 A2 ist allerdings, dass einzig und allein Signale über das Kabel zwischen der Grafikkarte und dem Anzeigeadapter übertragen werden können, die auch von der Grafikkarte erzeugt und/oder verarbeitet werden können. Die EP 1 507 253 A2 zeigt daher keinen Bildschirm mit Tastschirm und würde eine Übertragung der Tastschirmdaten über die bereits bestehende Kabelverbindung auch nicht erlauben, weil die Grafikkarte nicht über die hierfür notwendigen Schnittstellen verfügt, so dass für den Betrieb eines Tastschirms weitere separate Kabelverbindungen notwendig wären.

Aus dem User Manual für die Bildschirmeinheit µLCD-32032-P1T der Firma 4D-Systems ist eine Anordnung bekannt, die aus einem Tastschirm, einer darunterliegenden Bildschirmeinheit und einer Steuereinheit besteht. Das Ziel dieser Anordnung ist, dass sie ohne eine zusätzliche Ausgabeeinheit angesteuert werden kann. Der sich auf der Steuereinheit befindliche Grafikprozessor kann derart programmiert werden, dass er selbstständig auf Benutzereingaben, die beispielsweise auf dem Tastschirm erfolgen können, reagieren kann. In dieser Anordnung wird eine Bildschirmeinheit zusammen mit einem Tastschirm und der notwendigen Steuereinheit derart aufgebaut, dass die Bildschirmeinheit autonom betrieben werden kann, also ohne dass Steuerdaten von einer übergeordneten Ausgabeeinheit notwendig sind. Außerdem sollen bei der autonom arbeitenden Anordnung Eingaben der Benutzer ebenfalls ohne Einbeziehung einer übergeordneten Ausgabeeinheit ausgewertet werden.

Der Erfindung liegt daher die Aufgabe zugrunde, eine Bildschirmeinheit mit einem Tastschirm zu schaffen, wobei die Bildschirmeinheit mit dem Tastschirm möglichst einfach verbunden sein soll.

Die Aufgabe wird durch eine Bildschirmeinheit mit Tastschirm gemäß dem Merkmal des Anspruchs 1 gelöst. Die Unteransprüche enthalten vorteilhafte Weiterbildungen der Erfindung.

Die Bildschirmeinheit ist dabei über eine erste Verbindung mit einer Steuereinheit verbunden. Die Steuereinheit selbst ist wiederum über eine zweite Verbindung mit einer Ausgabeeinheit verbunden. Über die zweite Verbindung werden sowohl die Steuereinheit, als auch die Bildschirmeinheit gemeinsam mit elektrischer Energie versorgt. Weiterhin werden über beide Verbindungen Daten zum Ansteuern der Bildschirmeinheit an diese übertragen. Die Bildschirmeinheit weist ferner einen Tastschirm auf, wobei der Tastschirm ebenfalls einzig mit der Steuereinheit verbunden ist. Dadurch wird erreicht, dass allein durch eine einzige Verbindung, sowohl die Steuereinheit, als auch die Bildschirmeinheit mit elektrischer Energie versorgt werden und gleichzeitig über diese Verbindung die zu visualisierenden Anzeigedaten an die Bildschirmeinheit gesendet werden und Positionsdaten, kommend vom Tastschirm, an die Ausgabeeinheit übertragen werden können. Hiermit ist es möglich, dass die Bildschirmeinheit zusammen mit dem Tastschirm und der Steuereinheit sehr einfach in der Produktion gefertigt werden können und im Folgenden in der Endmontage nur eine einzige Verbindung zwischen der Steuereinheit und der Ausgabeeinheit hergestellt werden muss.

Ein weiter Vorteil der Erfindung besteht, wenn die Steuereinheit auf einer Platine ausgebildet ist und diese fest mit der Bildschirmeinheit verbunden ist. Dadurch kann sehr einfach ein Modul bestehend aus der Bildschirmeinheit, dem Tastschirm und der Platine der Steuereinheit hergestellt werden. Dieses Modul wird anschließend in der Endfertigung über eine Verbindung mit der Ausgabeeinheit verbunden, wodurch neben der Produktionszeit auch die Kosten für weitere Verbindungen entfallen. Gerade hierbei ist zu erwähnen, dass in Kleinserien und/oder Niedrigpreisserien Kosten für Kabel und vor allem für deren Konfektionierung nicht mehr vernachlässigt werden können.

Ein weiterer Vorteil der Erfindung besteht, wenn eine Kontrolleinheit für den Tastschirm auf bzw. an der Steuereinheit angeordnet ist. Diese Kontrolleinheit ist zum einen mit dem Tastschirm und zum anderen mit der Ausgabeeinheit verbunden und enthält die für den Tastschirm benötigten Kalibrierdaten. Wird im Folgenden die Ausgabeeinheit gewechselt, so kann der Tastschirm problemlos mit der neuen Ausgabeeinheit betrieben werden. Besonders vorteilhaft ist dabei, dass die Kontrolleinheit für den Tastschirm über das USB-Protokoll mit der Ausgabeeinheit Daten austauscht. Diese Schnittstelle ist einerseits weit verbreitet und bekannt und andererseits wird die Kontrolleinheit direkt über diese Schnittstelle mit elektrischer Energie versorgt. Dadurch ist es möglich, dass die Stromzufuhr zur Bildschirmeinheit über die zweite Verbindung abgeschaltet wird, wobei der Tastschirm gleichzeitig weiterhin mit Energie versorgt wird und ein einfacher Stand-By-Betrieb der Bildschirmeinheit realisiert werden kann. Weil ohnehin die Steuereinheit bevorzugt auf einer Platine ausgebildet ist, kann die Kontrolleinheit für den Tastschirm ebenfalls auf dieser integriert werden, so dass auf eine weitere externe Peripherie verzichtet werden kann.

Ein weiterer Vorteil der Erfindung besteht, wenn auf der Steuereinheit ein LVDS-Empfänger (engl. low voltage differential signaling; dt. differentielle Signalgebung bei niedrigen Spannungen) angeordnet ist, der einerseits direkt mit der Bildschirm und andererseits über die zweite Verbindung mit einem LVDS-Sender, der direkt in einem Grafikchip der Ausgabeeinheit integriert sein kann, kommuniziert. Die niedrigen LVDS-Signalpegel erzeugen dabei auch bei hohen Datenraten moderate Störemissionen. Mit einem starken LVDS-Sender sind auch Kabellängen von mehr als z.B. einen Meter beherrschbar. Optional kann die Bildschirmeinheit über die Steuereinheit und die erste und die zweite Verbindung auch direkt mit einem Displayport-Anschluss des Grafikchips der Ausgabeeinheit verbunden werden. Die dadurch erzielbaren höheren Datenraten können dazu verwendet werden, die Bildschirmeinheit mit einer höheren Auflösung zu betreiben.

Ein weiterer Vorteil der Erfindung ist gegeben, wenn auf der Steuereinheit ein EDID-EEPROM (engl. extended display identification data - electrically erasable programmable read only memory; dt. erweiterte Bildschirmidentifizierungsdaten - elektrisch löschbarer programmierbarer Nur-Lese-Speicher) angeordnet ist. In diesem Baustein sind alle relevanten Daten gespeichert, die benötigt werden um die Bildschirmeinheit ordnungsgemäß zu betreiben. Dabei handelt es sich unter anderem um die Bildschirmgröße und Timingzeiten. Dieser Baustein kann auf einfache Weise über die zweite Verbindung von der Ausgabeeinheit ausgelesen werden. Dadurch wird eine "Plug and Play" Erkennung der Bildschirmeinheit ermöglicht.

Ein weiterer Vorteil der Erfindung besteht, wenn die Kabelverbindungen kostengünstig durch Folienkabel realisiert werden können. Auf eine Verdrillung und/oder gesonderte Abschirmung kann dann aufgrund der niedrigen Signalpegel verzichtet werden. Weiterhin kann die Konfektion eines Folienkabels besonders einfach erfolgen, wodurch weitere Kosten vermieden werden.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: eine Übersicht über das Gesamtsystem des Ausführungsbeispiels der erfindungsgemäßen Bildschirmeinheit mit Tastschirm;
- Fig. 2: eine Detailansicht der montierten Steuereinheit mit den notwendigen Bausteinen und Verbindungen der erfindungsgemäßen Bildschirmeinheit mit Tastschirm;
- Fig. 3: eine Detailansicht eines weiteren erfindungsgemäßen Ausführungsbeispiels der montierten Steuereinheit mit den notwendigen Bausteinen und Verbindungen der erfindungsgemäßen Bildschirmeinheit mit Tastschirm; und
- Fig. 4: eine räumliche Darstellung der erfindungsgemäßen Bildschirmeinheit mit Tastschirm und Steuereinheit zusammen mit den notwendigen Bausteinen und Verbindungen.

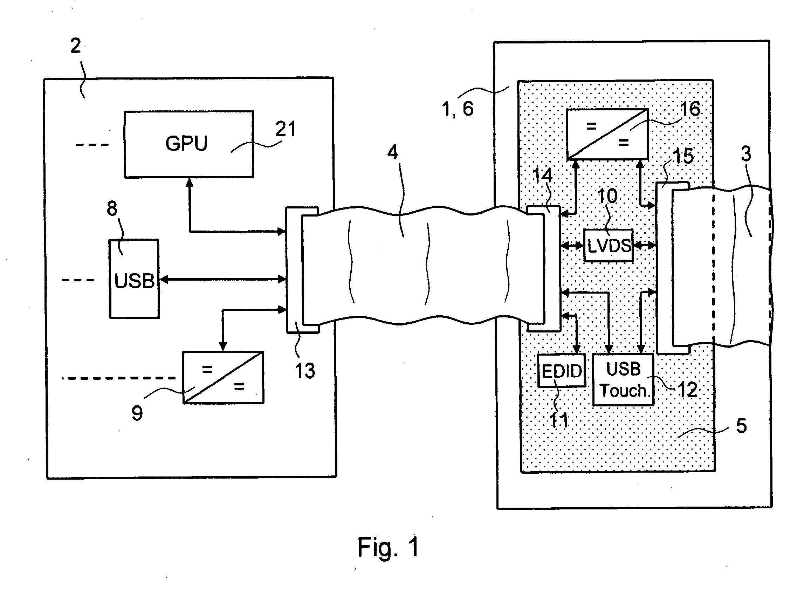

Fig. 1 gibt einen Überblick über das Gesamtsystem der erfindungsgemäßen Bildschirmeinheit l mit Tastschirm 6. Die eingezeichneten Pfeile sollen den Datenfluss zwischen den einzelnen Komponenten veranschaulichen. Zu erkennen sind die beiden zentralen Komponenten der Erfindung, die Ausgabeeinheit 2 und die Bildschirmeinheit 1. Eine Steuereinheit 5 ist dabei auf einer Platine ausgebildet, wobei die Platine bevorzugt fest mit der Bildschirmeinheit verbunden ist. Die Platine der Steuereinheit 5 ist in den Zeichnungsfiguren durch eine gepunktete Fläche dargestellt. Bei der Platine der Steuereinheit handelt es sich vorzugsweise um eine 4-Lagen PCB-Multilayer Platine 5 (engl. Printed Circuit Board; dt. gedruckte Schaltung). Allerdings sind auch andere Ausführungsformen bezüglich der Lagenanzahl, als auch der Substratart möglich.

Auf der Platine der Steuereinheit 5 sind in der in Fig. 1 dargestellten erfindungsgemäßen Ausführungsform zwei Verbindungskonnektoren 14, 15 ausgebildet. Bei diesen Verbindungskonnektoren 14, 15 handelt es sich vorzugsweise jeweils um ZIF-Konnektoren 14, 15 (engl. zero insection force; dt. Nullkraftfassung). Bei der Ausgabeeinheit 2 handelt es sich für gewöhnlich um ein Computersystem oder ein Messgerätesystem. Weil es in den Zeichnungsfiguren nicht möglich ist, sämtliche Komponenten, die ein Computersystem umfasst, darzustellen, wird durch mehrere gestrichelte Linien angedeutet, dass die Ausgabeeinheit 2 noch weitere Komponenten umfassen kann.

Die Ausgabeeinheit 2 weist ebenfalls zumindest einen Verbindungskonnektor 13 auf. Bei diesem Verbindungskonnektor 13 handelt es sich ebenfalls vorzugsweise um einen ZIF-Konnektor. Über eine zweite Verbindung 4 ist die Platine der Steuereinheit 5 mit der Ausgabeeinheit 2 verbunden. Bei dieser zweiten Verbindung 4 handelt es sich um eine Kabelverbindung und/oder um eine Steckverbindung. In Fig. 1 ist diese zweite Verbindung 4 als Kabelverbindung über die beiden Verbindungskonnektoren 13, 14 ausgebildet. Bei dem Verbindungskabel für die zweite Verbindung handelt es sich bevorzugt um ein Folienkabel, welches sowohl in der Beschaffung als auch in der Konfektion günstig ist. Das Kabel ist in diesem Ausführungsbeispiel nicht verdrillt. Allerdings ist es möglich, auch andere Kabel, die z.B. geschirmt und/oder verdrillt sind, zu verwenden.

In dem erfindungsgemäßen Ausführungsbeispiel aus Fig. 1 ist der Tastschirm 6 direkt in das Glassubstrat der Bildschirmeinheit 1 integriert. Bei der Bildschirmeinheit 1 handelt es sich vorzugsweise um eine LCD-Bildschirmeinheit (engl. liquid crystal display; dt. Flüssigkristallanzeige), allerdings können auch andere Ausführungsformen der Bildschirmeinheit 1, die sich zum Visualisieren von Anzeigedaten eignen, verwendet werden. Bei dem Tastschirm 6 handelt es sich um ein berührungssensitives Eingabegerät. Bevorzugt handelt es sich bei dem Tastschirm 6 um einen resistiven Tastschirm 6. Der Einsatz eines kapazitiven oder induktiven Tastschirms 6 ist ebenfalls möglich, wenn auch diese Tastschirme 6 teilweise spezielle Eingabestifte zur Bedienung verlangen.

Über eine erste Verbindung 3 ist der Verbindungskonnektor 15 der Steuereinheit 5 mit der Bildschirmeinheit 1 und dem Tastschirm 6 verbunden. In Fig. 1 ist diese erste Verbindung 3 als Kabelverbindung ausgebildet. Vorzugsweise werden dabei ebenfalls Folienkabel eingesetzt. Auf eine Verdrillung des Kabels wird in der ersten Verbindung 3 im Ausführungsbeispiel verzichtet, allerdings können ebenfalls verdrillte und/oder geschirmte Kabel eingesetzt werden. Die erste Verbindung 3 kann in einem weiteren nicht dargestellten erfindungsgemäßen Ausführungsbeispiel als Kabelverbindung und/oder als Steckverbindung ausgeführt sein. In diesem Fall wird der Verbindungskonnektor 15 durch eine Steckverbindung ersetzt, die auf der Unterseite der Platine der Steuereinheit 5 angeordnet ist. Auf der Rückseite der Bildschirmeinheit 1 ist in diesem Fall das passende Gegenstück ausgebildet.

Der in die Bildschirmeinheit 1 integrierte Tastschirm 6 überträgt über die erste Verbindung 3 und den Verbindungskonnektor 15 Daten zu einer Kontrolleinheit 12 für den Tastschirm 6, die ebenfalls auf der Platine der Steuereinheit 5 ausgebildet ist. Dadurch ist der in die Bildschirmeinheit 1 integrierte Tastschirm 6 über die erste Verbindung 3 mit der Steuereinheit 5 verbunden. Bei den zu übertragenden Daten handelt es bevorzugt um analoge Daten, die den vom Benutzer berührten Bereich auf dem Tastschirm 6 wiedergeben. Diese analogen Daten werden in der Kontrolleinheit 12 für den Tastschirm 6 weiterverarbeitet.

Die Kontrolleinheit 12 für den Tastschirm 6 enthält überdies Kalibrierdaten, wodurch ein weiterer Betrieb auch nach einem Wechsel der Ausgabeeinheit 2 gewährleistet ist. Bei diesen Kalibrierdaten handelt es sich unter anderem um die Größe des Tastschirms 6. Die Kontrolleinheit 12 für den Tastschirm 6 verarbeitet die über die erste Verbindung 3 zugeführten analogen Daten und stellt diese über eine digitale Schnittstelle der Ausgabeeinheit 2 zu Verfügung. Bei dieser digitalen Schnittstelle handelt es sich bevorzugt um eine USB-Schnittstelle (engl. universal serial bus; dt. universeller serieller Bus) oder eine zur USB-Schnittstelle kompatible Schnittstelle. Allerdings kann auch z.B. eine RS232-Schnittstelle eingesetzt werden. Der Einsatz anderer digitaler Schnittstellen ist ebenfalls möglich.

Die auf der Steuereinheit 5 ausgebildete Kontrolleinheit 12 für den Tastschirm 6 ist über die zweite Verbindung 4 mit der Ausgabeeinheit 2 verbunden. In Fig. 1 erfolgt diese Verbindung über die Verbindungskonnektoren 13 und 14, sowie über das angeschlossene Kabel. Allerdings kann es sich bei der zweiten Verbindung 4 auch um eine Steckverbindung handeln. Über diese zweite Verbindung 4 ist es der Kontrolleinheit 12 für den Tastschirm 6 möglich mit der Ausgabeeinheit 2 Daten über das USB-Protokoll auszutauschen. Wie bereits erwähnt, können auch andere Protokolle verwendet werden, solange diese von der Ausgabeeinheit 2 unterstützt werden. In dem gezeigten erfindungsgemäßen Ausführungsbeispiel ist es notwendig, dass die Ausgabeeinheit 2 einen USB-Kontroller 8 beinhaltet. Bei modernen Computersystemen ist dieser USB-Kontroller 8 direkt in der Brücke (Southbridge) integriert.

Besonders vorteilhaft ist es, wenn die Kontrolleinheit 12 des Tastschirms 6 direkt durch den USB-Bus über die zweite Verbindung 4 mit elektrischer Energie versorgt wird. Dadurch ist es möglich, dass der Tastschirm 6 auch bei ausgeschalteter Bildschirmeinheit 1 weiter aktiv ist. Der Benutzer muss im Folgenden einzig den Tastschirm berühren, wodurch ein Wechsel vom Stand-By-Betrieb in den normalen Betrieb eingeleitet wird.

Weiterhin ist auf der Steuereinheit 5 ein EDID-EEPROM 11 angeordnet. In diesem EDID-EEPROM 11 werden die Eigenschaften der Bildschirmeinheit 1 gespeichert. Dabei handelt es sich um Daten wie z.B. die Bildschirmgröße, die Timingrate und der Hersteller. Je nach EDID-Version handelt es sich dabei um eine 128 Byte oder 256 Byte Datenstruktur. Das auf der Steuereinheit angeordnete EDID-EEPROM 11 ist in dem in Fig. 1 dargestellten Ausführungsbeispiel über die zweite Verbindung 4 mit dem Grafikchip 7 der Ausgabeeinheit 2 verbunden. Der Grafikchip 7 liest die im EDID-EEPROM 11 gespeicherten Werte aus und stellt im Folgenden die Anzeigedaten derart ein, dass diese von der Bildschirmeinheit 1 ausgegeben werden können. Bevorzugt wird das EDID-EEPROM 11 über eine I²C (engl. inter-integrated circuit; dt. Verbindung integrierter Schaltungen) kompatible Verbindung ausgelesen, wobei das EDID-EEPROM 11 auch dann ausgelesen werden kann, wenn die Bildschirmeinheit 1 abgeschaltet ist.

Weiterhin wird die erfindungsgemäße Bildschirmeinheit 1 mit Tastschirm 6 und die Steuereinheit 5 über die zweite Verbindung 4 mit elektrischer Energie versorgt. Diese elektrische Energie wird auf der Seite der Ausgabeeinheit 2 durch einen leistungselektronischen Baustein 9 erzeugt und über die zweite Verbindung 4 der Steuereinheit 5 zugeführt. Bei dem leistungselektronischen Baustein 9 kann es sich z.B. um einen Linearregler handeln. Damit die benötigte Leistung übertragen werden kann, ist es sinnvoll, eine hohe Spannung zu wählen, damit der resultierende Strom klein gehalten und ein Folienkabel verwendet werden kann. Dabei können mehrere Adern des Folienkabels parallel geschaltet werden, um den benötigten Strom bestmöglich zu verteilen.

Handelt es sich bei der Ausgabeeinheit 2 um ein Computersystem, so sind Spannungen von z.B. 12 Volt üblich. Auf der Seite der Steuereinheit 5 befindet sich ebenfalls zumindest ein leistungselektronischer Baustein 16, der über die zweite Verbindung 4 mit dem leistungselektronischen Baustein 9 auf der Ausgabeeinheit 2 verbunden ist. Der leistungselektronische Baustein 16 auf der Steuereinheit 5 setzt die Spannung, die von dem leistungselektronischen Baustein 9 angelegt wird, in verschiedene Spannungen um und stabilisiert diese. Über den leistungselektronischen Baustein 16 wird z.B. die Bildschirmeinheit 1 mit dazugehörigem, in Fig. 1 nicht dargestelltem, Kontroller mit elektrischer Energie versorgt. Weiterhin werden zusätzliche Bausteine, wie z.B. der LVDS-Empfänger und weitere nicht dargestellte Logikbausteine über den leistungselektronischen Baustein 9 mit elektrischer Energie versorgt.

Der Ausgabeeinheit 2 ist es dabei je nach erfindungsgemäßer Ausführungsform möglich, den leistungselektronischen Baustein 9 und/oder den leistungselektronischen Baustein 16 abzuschalten. Dies erfolgt über ein nicht dargestelltes Steuersignal, welches je nach Ausführungsform auch über die zweite Verbindung 4 übertragen wird. Die Versorgung mit elektrischer Energie der an den leistungselektronischen Bausteinen 9,16 angeschlossenen Verbraucher wird damit unterbrochen. Auf diese Weise lässt sich auch der Stand-By-Betrieb der erfindungsgemäßen Bildschirmeinheit 1 erzielen.

Bevorzugt handelt es sich bei der Bildschirmeinheit 1 um eine LCD-Bildschirmeinheit 1, wobei ein Treiber für eine LED-Hintergrundbeleuchtung (engl. light emission diode; dt. lichtemittierende Diode) der LCD-Bildschirmeinheit 1 auf der Steuerplatine angeordnet ist. Dieser Treiber ist in dem erfindungsgemäßen Ausführungsbeispiel in dem leistungselektronischen Baustein 16 integriert, wobei er auch als eigenständiger Baustein ausgeführt sein kann. Der Treiber kann in einem weiten Spannungsbereich von ca. 3,3 V bis ca. 12 V betrieben werden. Die Helligkeit der LED-Hintergrundbeleuchtung kann über ein PWM-Signal (Pulsweitenmodulation) eingestellt werden. Dieses PWM-Signal wird z.B. durch den Grafikchip 7 auf der Ausgabeeinheit 2 generiert und über die zweite Verbindung an den leistungselektronischen Baustein 16 übermittelt. Der Stand-By-Betrieb kann auch durch die Wahl eines Puls-Pause Verhältnisses von 0% in dem PWM-Signal realisiert werden.

In einem weiteren nicht dargestellten Ausführungsbeispiel kann auf der Platine der Steuereinheit 5 noch ein Mikrokontroller vorhanden sein, der das PWM-Signal erzeugt. Die Ausgabeeinheit 2 übermittelt dem Mikrokontroller über eine weitere Schnittstelle das einzustellende Puls-Pause-Verhältnis. Als Schnittstelle kann z.B. I²C dienen, über die das EDID-EEPROM 11 bereits an die Ausgabeeinheit 2 angebunden ist. Ebenfalls wird über die zweite Verbindung 4 der einzustellende Kontrast von dem Grafikchip 7 der Ausgabeeinheit 2 an den in Fig. 1 nicht dargestellten Kontroller der Bildschirmeinheit 1 übertragen.

Auf der Steuereinheit 5 ist außerdem ein LVDS-Empfänger 10 angeordnet. Dieser LVDS-Empfänger 10 ist über die zweite Verbindung 4 einerseits direkt dem einem LVDS-Sender und andererseits über die erste Verbindung 3 mit dem nicht dargestellten Kontroller der Bildschirmeinheit 1 verbunden. Der LVDS-Sender ist direkt in dem Grafikchip 7 der Ausgabeeinheit 2 integriert. Über diese LVDS-Schnittstelle kann ein paralleler Datenstrom, bzw. in diesem Fall eine parallele digitale RGB-Schnittstelle seriellisiert und mit einer hohen Datenrate aufgrund des relativ geringen Spannungspegels übertragen werden. Die Übertragung ist aufgrund der differentiellen Übertragung unempfindlich gegen Gleichtaktstörungen. Durch die Seriellisierung können weitere Leitungen eingespart werden. Der LVDS-Empfänger 10 setzt den seriellen Datenstrom wieder in einen parallelen Datenstrom um. Über die LVDS-Schnittstelle werden in dem gezeigten erfindungsgemäßen Ausführungsbeispiel die auf der Bildschirmeinheit 1 anzuzeigenden Daten von dem Grafikchip 7 an den nicht dargestellten Kontroller der Bildschirmeinheit 1 übermittelt.

In einem weiteren nicht dargestellten Erfindungsgemäßen Ausführungsbeispiel wird die Bildschirmeinheit 1 über die erste Verbindung 3 und die zweite Verbindung 4 direkt mit dem DisplayPort-Anschluss des Grafikchips 7 der Ausgabeeinheit 2 verbunden.

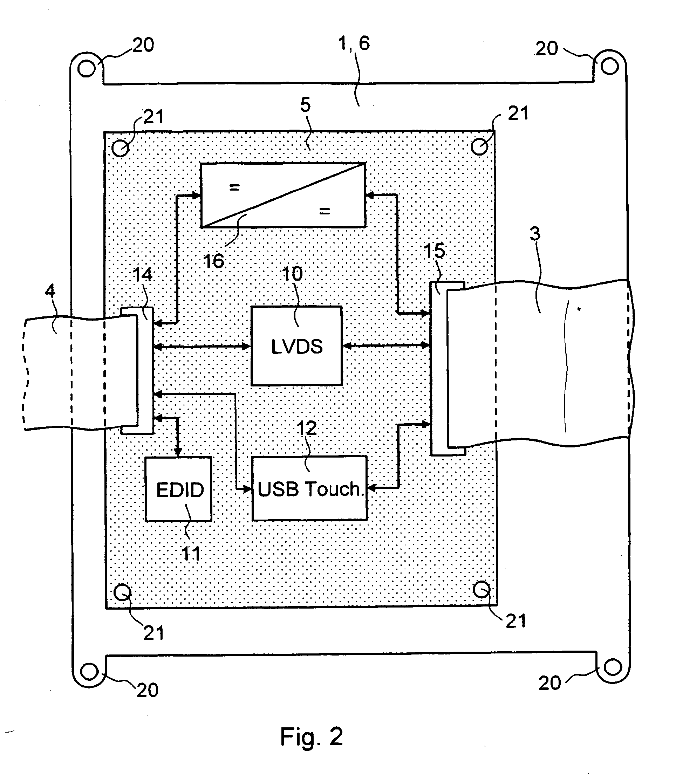

Fig. 2 zeigt eine Detailansicht eines weiteren erfindungsgemäßen Ausführungsbeispiels der Bildschirmeinheit 1 mit Tastschirm 6 zusammen mit der Steuereinheit 5. Der Aufbau und die Funktionsweise des in Fig. 2 gezeigten weiteren erfindungsgemäßen Ausführungsbeispiels ist in weiten Teilen identisch mit dem bereits in Fig. 1 beschrieben erfindungsgemäßen Ausführungsbeispiels, worauf hiermit verwiesen wird. Gut zu erkennen ist die Platine der Steuereinheit 5, auf welcher die Verbindungskonnektoren 14 und 15, der leistungselektronische Baustein 16, der LVDS-Empfänger 10, die Kontrolleinheit 12 für den Tastschirm 6 und das EDID-EEPROM 11 angeordnet sind.

Im Unterschied zu Fig. 1 weist die Platine der Steuereinheit 5 kreisrunde Ausnehmungen 21 auf. Die auf der Platine ausgebildete Steuereinheit 5 ist fest auf der Rückseite des Gehäuses der Bildschirmeinheit 1 außenseitig befestigt. Die Befestigung erfolgt mittels einer Schraubverbindung. Hierzu weist neben der der Platine der Steuereinheit 5 auch das Gehäuse der Bildschirmeinheit 1 entsprechende Ausnehmungen 21 auf. Diese Ausnehmungen 21 sind bevorzugt an den Ecken der Platine ausgebildet. Die Platine der Steuereinheit 5 und die Bildschirmeinheit 1 mit dem Tastschirm 6 sind fest miteinander verbunden und bilden eine Moduleinheit. Diese Moduleinheit kann leicht auf ihre Funktionsfähigkeit geprüft werden und wird anschließend bei der Endmontage in das zu fertigende Gerät eingesetzt. Anschließend muss einzig die zweite Verbindung 4 zwischen der Steuereinheit 5 und der Ausgabeeinheit 2 hergestellt werden.

Diese zweite Verbindung 4 wird, wie bereits erläutert, bevorzugt durch ein Folienkabel hergestellt. Das Folienkabel kann, aufgrund seiner dünnen und flexiblen Form, formschlüssig innerhalb eines Gehäuses verlegt werden. Je nach Anwendung kann die Länge des Folienkabels ohne großen Mehraufwand unterschiedlich gewählt werden. Dadurch ist gewährleistet, dass das Kabel für die zweite Verbindung 4 nicht unter Spannung steht und dass dieses auch nicht zu lang ist, als dass es nicht mehr formschlüssig innerhalb des Gehäuses verlegt werden könnte.

Diese Vorteile sind bei einem Einsatz eines anderen Kabeltyps nicht gegeben. Gerade verdrillte und geschirmte Leitungen sind zwar robuster, gleichzeitig allerdings weniger flexibel und dafür bedeutend kostenintensiver. Gerade für differentielle Kommunikationsvorgänge innerhalb eines Gerätes sind diese Eigenschaften nicht unbedingt notwendig, so dass Folienkabel eine bessere Alternative darstellen.

Fig. 2 zeigt weiterhin die Ausformung von mehreren Flanschen 20, die an zumindest zwei Ecken der Bildschirmeinheit 1 ausgebildet sind. Mittels dieser Flansche 20 kann die Moduleinheit, die aus der Bildschirmeinheit 1 mit dem Tastschirm 6 und der Platine der Steuereinheit 5 besteht, an dem Gehäuse des zu integrierenden Geräts befestigt werden. Bei dieser Befestigung handelt es sich im Ausführungsbespiel ebenfalls um eine Schraubverbindung.

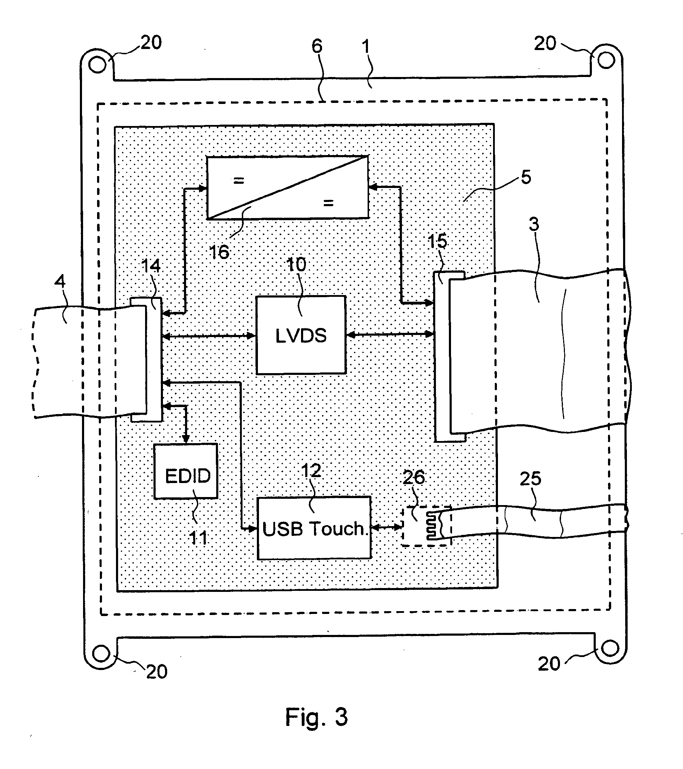

Fig. 3 zeigt eine Detailansicht eines weiteren erfindungsgemäßen Ausführungsbeispiels der Bildschirmeinheit 1 mit Tastschirm 6 zusammen mit der Steuereinheit 5. Der Aufbau und die Funktionsweise des in Fig. 3 gezeigten Ausführungsbeispiels ist in weiten Teilen identisch mit dem bereits in Fig. 1 beschrieben Ausführungsbeispiel, worauf hiermit verwiesen wird.

Gut zu erkennen ist die Platine der Steuereinheit 5, auf welcher die Verbindungskonnektoren 14 und 15, der leistungselektronische Baustein 16, der LVDS-Empfänger 10, die Kontrolleinheit 12 für den Tastschirm 6 und das EDID-EEPROM 11 angeordnet sind. Die Platine der Steuereinheit 5 ist, wie auch in Fig. 1 dargestellt, fest auf der Rückseite des Gehäuses der Bildschirmeinheit 1 außenseitig befestigt. Im Gegensatz zu dem erfindungsgemäßen Ausführungsbeispiel der Fig. 2 ist die Platine der Steuereinheit 5 allerdings nicht mit der Rückseite des Gehäuses verschraubt, sondern verklebt. Gerade bei sehr dünnen Bildschirmeinheiten 1 ist eine Bohrung oft nicht möglich. Eine zusätzliche Verschraubung, wie in Fig. 2 gezeigt, ist, falls es die Bildschirmeinheit 1 erlaubt, aber dennoch möglich. Die auf der Platine ausgebildete Steuereinheit 5 ist ebenfalls fest auf der Rückseite des Gehäuses der Bildschirmeinheit 1 außenseitig befestigt. Fig. 3 zeigt weiterhin die Ausbildung von mehreren Flanschen 20, die an zumindest zwei Ecken der Bildschirmeinheit 1 ausgeformt sind. Mittels dieser Flansche 20 kann die Moduleinheit, die aus der Bildschirmeinheit 1 mit dem Tastschirm 6 und der der Platine der Steuereinheit 5 besteht, an dem Gehäuse des zu integrierenden Geräts befestigt werden. Bei dieser Befestigung handelt es sich ebenfalls bevorzugt um eine Schraubverbindung. Entsprechend der Figurenbeschreibung zu Fig. 2 wird die Bildschirmeinheit 1 auch beim Ausführungsbeispiel aus Fig. 3 mit der Ausgabeeinheit 2 verbunden und mit dem zu integrierenden Gerät verschraubt.

Allerdings ist der Tastschirm 6 nicht mehr direkt in die Bildschirmeinheit 1 integriert. Der Tastschirm 6 ist stattdessen auf die Bildschirmeinheit 1 aufgeklebt und über eine dritte Verbindung 25 mit der Steuereinheit 2 verbunden. Diese dritte Verbindung 25 ist in Fig. 3 als Kabelverbindung dargestellt. Denkbar ist auch, dass es sich dabei um eine um eine Steckverbindung handelt. Der Tastschirm 6 selbst ist in Fig. 3 als gestricheltes Viereck dargestellt, der direkt auf den sichtbaren Bildbereich der Bildschirmeinheit 1 geklebt ist. Dadurch, dass der Tastschirm 6 analoge Daten ausgibt, werden für die Übertragung weniger Leitungen benötigt, so dass das Folienkabel direkt auf ein Anschlusspad 26 der Platine der Steuereinheit 5 aufgelötet werden kann. Selbstverständlich kann das Folienkabel der dritten Verbindung 25 auch an einen Verbindungskonnektor im Sinne eines ZIF-Konnektors angeschlossen werden. Über das Anschlusspad 26 und die dritte Verbindung 25 ist der Tastschirm 6 mit der Kontrolleinheit 12 für den Tastschirm 6 verbunden. Werden Folienkabel verwendet, so erhöht sich die Bauhöhe nur marginal, weil diese glatt und absolut formschlüssig an dem sie umgebenden Gehäuse anliegen. In den Zeichnungsfiguren ist diese Kabelverbindung übertrieben gewellt dargestellt, um zu verdeutlichen, dass es sich dabei um eine Kabelverbindung handelt.

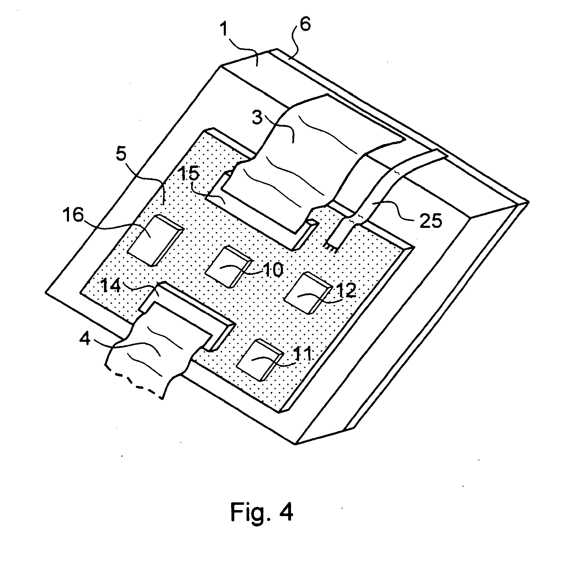

Fig. 4 zeigt eine mögliche räumliche nicht maßstabsgetreue Darstellung der erfindungsgemäßen Bildschirmeinheit 1 mit Tastschirm 6. Zu sehen ist, dass der Tastschirm 6 in diesem erfindungsgemäßen Ausführungsbeispiel nicht direkt in der Bildschirmeinheit 1 integriert ist. Der Tastschirm 6 ist in Fig. 4 auf die Bildschirmeinheit 1 aufgeklebt. Auf der Rückseite des Gehäuses der Bildschirmeinheit 1 ist außenseitig die Platine der Steuereinheit 5 befestigt. Die dritte Verbindung 25 erfolgt über eine Folienkabelverbindung von dem Tastschirm 6 ausgehend zu der Platine der Steuereinheit 5. Das Folienkabel liegt dabei formschlüssig an dem Tastschirm 6, der Bildschirmeinheit 1 und der Platine der Steuereinheit 5 an.

Die erste Verbindung 3 erfolgt ebenfalls über eine Folienkabelverbindung von der Bildschirmeinheit 1 ausgehend zu der Platine der Steuereinheit 5. Das Folienkabel liegt dabei formschlüssig an der Bildschirmeinheit 1 und der Platine der Steuereinheit 5 an. Weiterhin sind die Verbindungskonnektoren 14 und 15, der leistungselektronische Baustein 16, der LVDS-Empfänger 10, die Kontrolleinheit 12 für den Tastschirm 6 und das EDID-EEPROM 11 zu erkennen. Weitere notwenige Bauteile, wie Kapazitäten und Widerstände zum Abschluss von Leitungen, sind aus Gründen der Übersichtlichkeit nicht in Fig. 4 eingezeichnet.

Insgesamt wird durch die vorliegende erfindungsgemäße Ausgestaltung eine Lösung geschaffen, die es erlaubt auf sehr vorteilhafte Weise eine Moduleinheit bestehend aus der Bildschirmeinheit 1 mit Tastschirm 6 und einer Steuereinheit 5 zu erstellen, die über eine einzige Schnittstelle mit einer Ausgabeeinheit kommuniziert, so dass in allen Geräten, in denen diese Moduleinheit eingesetzt werden soll, auf eine einzelne Implementierung der notwendigen Baugruppen verzichtet werden kann. Dadurch wird sehr viel Entwicklungs- und Testzeit eigespart. Es muss hierfür einzig der Verbindungskonnektor 13 auf einer Ausgabeeinheit vorgesehen und richtig beschaltet sein.

Besonders vorteilhaft dabei ist, dass die notwendigen Treiberbausteine bereits auf der Platine der Steuereinheit 5 integriert sind und diese bei der Entwicklung eines weiteren Gerätes nicht mehr bedacht werden müssen. Computersysteme, die auf X86 basieren, aber auch Systeme mit ARM-Prozessoren, auf die die Erfindung bevorzugt abzielt, bringen die benötigten Schnittstellen bereits von Haus aus mit. Gerade bei Kleinserien mit weniger als tausend Bildschirmeinheiten 1 pro Jahr können die Bildschirmeinheiten 1 auf sehr vorteilhafte Weise nachträglich mit einem Tastschirm 1 und einer Steuereinheit 5 versehen werden, ohne dass dabei die Fertigung der Bildschirmeinheit 1 grundlegend geändert werden müsste.

In einem weiteren nicht dargestellten erfindungsgemäßen Ausführungsbeispiel ist die Steuereinheit 5 direkt in die Bildschirmeinheit 1 integriert. Dies kann durch verschiedene Techniken realisiert werden. Eine TFT-Bildschirmeinheit besteht zu einem wesentlichen Teil aus Transistoren. Zu den ohnehin vorhandenen Transistoren werden zusätzliche Transistoren hinzugefügt, mit denen weitere komplexe Funktionen realisiert werden. Bisher werden bereits der Zeilen- und der Spaltendekoder auf diese Art und Weise realisiert. Allerdings ist es mit dieser Technik ebenfalls möglich, sämtliche integrierte Schaltungen der Steuerplatine 5, wie z.B. das EDID-EEPROM 11, den LVDS-Empfänger 10 oder die Kontrolleinheit 12 für den Tastschirm 6, direkt in die Bildschirmeinheit 1 zu integrieren.

Speziell höher integrierte Schaltungen können auch mithilfe der COG-Technik (engl. chip on glass; dt. Chip auf Glas) direkt auf das Glassubstrat der Bildschirmeinheit 1 aufgetragen werden. Die gilt z.B. für den leistungselektronischen Baustein 16 für die LED-Hintergrundbeleuchtung oder auch für die anderen integrierten Schaltungen. Auf eine Steuerplatine 5 kann bei Verwendung von einer der beiden Techniken gänzlich verzichtet werden.

Die Erfindung ist nicht auf die dargestellten Ausführungsbeispiele beschränkt. Alle beschriebenen und/oder gezeichneten Elemente sind im Rahmen der Erfindung beliebig miteinander kombinierbar.

## Patentansprüche

1. Bildschirmeinheit (1), welche über eine erste Verbindung (3) mit einer Steuereinheit (5) verbunden ist, wobei die Steuereinheit (5) über eine zweite Verbindung (4) mit einer Ausgabeeinheit (2) verbunden ist, wobei über die zweite Verbindung (4) die Steuereinheit (5) und die Bildschirmeinheit (1) gemeinsam mit elektrischer Energie versorgt sind,
wobei über beide Verbindungen (3,4) Daten zum Ansteuern der Bildschirmeinheit (1) an diese übertragen werden, wobei die Bildschirmeinheit (1) zusätzlich einen Tastschirm (6) aufweist und wobei der Tastschirm (6) einzig mit der Steuereinheit (5) verbunden ist,
**dadurch gekennzeichnet,**
**dass** über die zweite Verbindung (4) die zu visualisierenden Anzeigedaten an die Bildschirmeinheit (1) gesendet werden und Positionsdaten kommend vom Tastschirm (6) an die Ausgabeeinheit (2) übertragen werden.

2. Bildschirmeinheit nach Anspruch 1,
**dadurch gekennzeichnet,**
**dass** es sich bei der zweiten Verbindung (4) um eine Kabelverbindung und/oder um eine Steckverbindung handelt und/oder dass es sich bei der ersten Verbindung (3) um eine Kabelverbindung und/oder um eine Steckverbindung handelt.

3. Bildschirmeinheit nach einem der vorherigen Ansprüche,
**dadurch gekennzeichnet,**
**dass** die Steuereinheit (5) auf einer Platine ausgebildet ist, die fest mit der Bildschirmeinheit (1) verbunden ist, oder dass die Steuereinheit (5) in die Bildschirmeinheit (1) integriert ist.

4. Bildschirmeinheit nach einem der vorherigen Ansprüche,
**dadurch gekennzeichnet,**
**dass** der Tastschirm (6) in die Bildschirmeinheit (1) integriert ist und über die erste Verbindung (3) mit der Steuereinheit (5) verbunden ist oder
**dass** der Tastschirm (6) über eine dritte Verbindung (25) mit der Steuereinheit (5) verbunden ist.

5. Bildschirmeinheit nach Anspruch 4,
**dadurch gekennzeichnet,**
**dass** es sich bei der dritten Verbindung (25) um eine Kabelverbindung und/oder um eine Steckverbindung handelt.

6. Bildschirmeinheit nach einem der vorherigen Ansprüche,
**dadurch gekennzeichnet,**
**dass** eine Kontrolleinheit (12) für den Tastschirm (6) als Bestandteil der Steuereinheit (5) vorhanden ist und über die zweite (4) Verbindung mit der Ausgabeeinheit (2) verbunden ist.

7. Bildschirmeinheit nach Anspruch 6,
**dadurch gekennzeichnet,**
**dass** die Kontrolleinheit (12) für den Tastschirm (6) Kalibrierdaten enthält und dadurch ein weiterer Betrieb auch nach einem Wechsel der Ausgabeeinheit (2) gewährleistet ist.

8. Bildschirmeinheit nach Anspruch 6 oder 7,
**dadurch gekennzeichnet,**
**dass** die Kontrolleinheit (12) für den Tastschirm (6) über ein USB-Protokoll mit der Ausgabeeinheit (2) Daten austauscht.

9. Bildschirmeinheit nach einem der Ansprüche 6 bis 8,
**dadurch gekennzeichnet,**
**dass** die Kontrolleinheit (12) für den Tastschirm (6) auf oder in der Steuereinheit (5) über die zweite Verbindung (4) mit elektrischer Energie versorgt ist und dass der Tastschirm (6) auch bei ausgeschalteter Bildschirmeinheit (1) weiter aktiv ist.

10. Bildschirmeinheit nach Anspruch 3,
**dadurch gekennzeichnet,**
**dass** die Platine der Steuereinheit (5) fest auf der Rückseite eines Gehäuses der Bildschirmeinheit (1) außenseitig befestigt ist.

11. Bildschirmeinheit nach Anspruch 10,
**dadurch gekennzeichnet,**
**dass** die Steuereinheit (5) fest auf die Rückseite der Bildschirmeinheit (1) geklebt und/oder geschraubt ist.

12. Bildschirmeinheit nach einem der vorhergehenden Ansprüche,
**dadurch gekennzeichnet,**
**dass** auf oder in der Steuereinheit (5) ein LVDS-Empfänger (10) angeordnet ist, der über die zweite Verbindung (4) mit einem LVDS-Sender verbunden ist und dass der LVDS-Sender in einem Grafikchip (21) der Ausgabeeinheit (2) integriert ist oder
**dass** über die erste Verbindung (3) und die zweite Verbindung (4) die Bildschirmeinheit (1) direkt mit einem DisplayPort-Anschluss eines Grafikchips (21) der Ausgabeeinheit (2) verbunden ist.

13. Bildschirmeinheit nach einem der vorhergehenden Ansprüche,
**dadurch gekennzeichnet,**
**dass** ein EDID-EEPROM (11) auf der Steuereinheit (5) angeordnet ist und dieses über die zweite Verbindung (4) mit einem Grafikchip (21) der Ausgabeeinheit (2) verbunden ist.

14. Bildschirmeinheit nach einem der vorhergehenden Ansprüche,
**dadurch gekennzeichnet,**
**dass** es sich bei der Bildschirmeinheit (1) um eine LCD-Bildschirmeinheit handelt und ein Treiber (16) für eine LED-Hintergrundbeleuchtung auf der Steuerplatine (5) angeordnet ist.

15. Bildschirmeinheit nach Anspruch 14,
**dadurch gekennzeichnet,**
**dass** die Helligkeit der LED-Hintergrundbeleuchtung durch ein PWM-Signal einstellbar ist, das über die zweite Verbindung (4) zugeführt ist.

16. Bildschirmeinheit nach Anspruch 2 oder 5
**dadurch gekennzeichnet,**
**dass** es sich bei den Kabelverbindungen um Folienkabel handelt.

17. Bildschirmeinheit nach einem der vorhergehenden Ansprüche,
**dadurch gekennzeichnet,**
**dass** es sich bei der Ausgabeeinheit (2) um ein Computersystem handelt.

## Claims

1. Screen unit (1) which is connected to a control unit (5) via a first connection (3), the control unit (5) being connected to an output unit (2) via a second connection (4), the control unit (5) and the screen unit (1) together being supplied with electrical energy via the second connection (4),
data for controlling the screen unit (1) being transmitted to the latter via both connections (3, 4), the screen unit (1) additionally having a touchscreen (6), and the touchscreen (6) only being connected to the control unit (5),
**characterized**
**in that** the display data to be visualized are sent to the screen unit (1) via the second connection (4), and position data coming from the touchscreen (6) are transmitted to the output unit (2).

2. Screen unit according to Claim 1,
**characterized**
**in that** the second connection (4) is a cable connection and/or a plug-in connection, and/or in that the first connection (3) is a cable connection and/or a plug-in connection.

3. Screen unit according to one of the preceding claims,
**characterized**
**in that** the control unit (5) is formed on a printed circuit board which is permanently connected to the screen unit (1), or in that the control unit (5) is integrated in the screen unit (1).

4. Screen unit according to one of the preceding claims,
**characterized**
**in that** the touchscreen (6) is integrated in the screen unit (1) and is connected to the control unit (5) via the first connection (3), or
**in that** the touchscreen (6) is connected to the control unit (5) via a third connection (25).

5. Screen unit according to Claim 4,
**characterized**
**in that** the third connection (25) is a cable connection and/or a plug-in connection.

6. Screen unit according to one of the preceding claims,
**characterized**
**in that** a monitoring unit (12) for the touchscreen (6) is provided as part of the control unit (5) and is connected to the output unit (2) via the second connection (4).

7. Screen unit according to Claim 6,
**characterized**
**in that** the monitoring unit (12) for the touchscreen (6) contains calibration data and, as a result, continued operation is ensured even after the output unit (2) has been changed.

8. Screen unit according to Claim 6 or 7,
**characterized**
**in that** the monitoring unit (12) for the touchscreen (6) interchanges data with the output unit (2) using a USB protocol.

9. Screen unit according to one of Claims 6 to 8,
**characterized**
**in that** the monitoring unit (12) for the touchscreen (6) on or in the control unit (5) is supplied with electrical energy via the second connection (4), and in that the touchscreen (6) continues to be active even when the screen unit (1) is switched off.

10. Screen unit according to Claim 3,
**characterized**
**in that** the printed circuit board of the control unit (5) is permanently fastened to the outside of the rear side of a housing of the screen unit (1).

11. Screen unit according to Claim 10,
**characterized**
**in that** the control unit (5) is permanently adhesively bonded and/or screwed to the rear side of the screen unit (1).

12. Screen unit according to one of the preceding claims,
**characterized**
**in that** an LVDS receiver (10) is arranged on or in the control unit (5) and is connected to an LVDS transmitter via the second connection (4), and in that the LVDS transmitter is integrated in a graphics chip (21) of the output unit (2), or
**in that** the screen unit (1) is directly connected to a display port connection of a graphics chip (21) of the output unit (2) via the first connection (3) and the second connection (4).

13. Screen unit according to one of the preceding claims,
**characterized**
**in that** an EDID EEPROM (11) is arranged on the control unit (5) and is connected to a graphics chip (21) of the output unit (2) via the second connection (4).

14. Screen unit according to one of the preceding claims,
**characterized**
**in that** the screen unit (1) is an LCD screen unit and a driver (16) for LED backlighting is arranged on the control printed circuit board (5).

15. Screen unit according to Claim 14,
**characterized**
**in that** the brightness of the LED backlighting can be adjusted by means of a PWM signal which is supplied via the second connection (4).

16. Screen unit according to Claim 2 or 5,
**characterized**
**in that** the cable connections are foil cables.

17. Screen unit according to one of the preceding claims,
**characterized**
**in that** the output unit (2) is a computer system.

## Revendications

1. Unité d'affichage (1), qui est reliée à une unité de commande (5) par l'intermédiaire d'une première liaison (3), dans laquelle l'unité de commande (5) est reliée à une unité de sortie (2) par l'intermédiaire d'une seconde liaison (4), dans laquelle l'unité de commande (5) et l'unité d'affichage (1) sont alimentées conjointement en énergie électrique par l'intermédiaire de la seconde liaison,
dans laquelle des données pour commander l'unité d'affichage (1) sont transmises à cette dernière par l'intermédiaire de deux liaison (3, 4),
dans laquelle l'unité d'affichage (1) présente en outre un écran tactile (6) et dans laquelle l'écran tactile (6) est relié uniquement à l'unité de commande (5), **caractérisée en ce que**
les données d'affichage à visualiser sont envoyées à l'unité d'affichage (1) par l'intermédiaire de la seconde liaison (4) et des données de position provenant de l'écran tactile (6) sont transmises à l'unité de sortie (2).

2. Unité d'affichage selon la revendication 1, **caractérisée en ce que** le
dans le cas de la seconde liaison (4), il s'agit d'une liaison par câble et/ou d'une liaison par enfichage et/ou **en ce que**, dans le cas de la première liaison (3), il s'agit d'une liaison par câble et/ou d'une liaison par enfichage.

3. Unité d'affichage selon l'une des revendications précédentes, **caractérisée en ce que**
l'unité de commande (5) est réalisée sur une carte, qui est reliée fixement à l'unité d'affichage (1), ou en ce que l'unité de commande (5) est intégrée dans l'unité d'affichage (1).

4. Unité d'affichage selon l'une des revendications précédentes, **caractérisée en ce que**
l'écran tactile (6) est intégré dans l'unité d'affichage (1) et est relié à l'unité de commande (5) par l'intermédiaire de la première liaison (3) ou
**en ce que** l'écran tactile (6) est relié à l'unité de commande (5) par l'intermédiaire d'une troisième liaison (25).

5. Unité d'affichage selon la revendication 4, **caractérisée en ce que**
dans le cas de la troisième liaison (25), il s'agit d'une liaison par câble et/ou d'une liaison par enfichage.

6. Unité d'affichage selon l'une des revendications précédentes, **caractérisée en ce que**
une unité de contrôle (12) est prévue pour l'écran tactile (6) en tant que composant de l'unité de commande (5) et est reliée à l'unité de sortie (2) par l'intermédiaire de la seconde liaison (4).

7. Unité d'affichage selon la revendication 6, **caractérisée en ce que**
l'unité de contrôle (12) contient des données d'étalonnage pour l'écran tactile (6) et ainsi une poursuite des activités est garantie également après un changement de l'unité de sortie (2).

8. Unité d'affichage selon la revendication 6 ou 7, **caractérisée en ce que**
l'unité de contrôle (12) échange des données pour l'écran tactile (6) avec l'unité de sortie (2) par l'intermédiaire d'un protocole USB.

9. Unité d'affichage selon l'une des revendications 6 à 8, **caractérisée en ce que**
l'unité de contrôle (12) pour l'écran tactile (6) est alimentée en énergie électrique sur ou dans l'unité de commande (5) par l'intermédiaire de la seconde liaison (4) et **en ce que** l'écran tactile (6) continue à être actif également dans le cas d'une unité d'affichage éteinte (1).

10. Unité d'affichage selon la revendication 3, **caractérisée en ce que**
la carte de l'unité de commande (5) est fixée fermement sur le côté arrière d'un boîtier de l'unité d'affichage (1) sur le côté extérieur.

11. Unité d'affichage selon la revendication 10, **caractérisée en ce que**
l'unité de commande (5) est collée et/ou vissée fermement sur le côté arrière de l'unité d'affichage (1).

12. Unité d'affichage selon l'une des revendications précédentes, **caractérisée en ce que**
sur ou dans l'unité de commande (5) est disposé un récepteur LVDS (10), qui est relié à un émetteur LVDS par l'intermédiaire de la seconde liaison (4) et **en ce que** l'émetteur LVDS est intégré dans une puce graphique (21) de l'unité de sortie (2) ou
**en ce que** l'unité d'affichage (1) est reliée directement à un connecteur-Display Port d'une puce graphique (21) de l'unité de sortie (2) par l'intermédiaire de la première liaison (3) et de la seconde liaison (4).

13. Unité d'affichage selon l'une des revendications précédentes, **caractérisée en ce que**
une EEPROM-EDID (11) est disposée sur l'unité de commande (5) et celle-ci est reliée à une puce graphique (21) de l'unité de sortie (2) par l'intermédiaire de la seconde liaison (4).

14. Unité d'affichage selon l'une des revendications précédentes, **caractérisée en ce que**
dans le cas de l'unité d'affichage (1), il s'agit d'une unité d'affichage LCD et un étage amplificateur (16) pour un rétroéclairage par LED est disposé sur la carte de commande (5).

15. Unité d'affichage selon la revendication 14, **caractérisée en ce que**
la luminosité du rétroéclairage par LED peut être réglée par un signal PWM, qui est délivré par l'intermédiaire de la seconde liaison (4).

16. Unité d'affichage selon la revendication 2 ou 5, **caractérisée en ce que**
dans le cas de liaisons par câble, il s'agit de câbles-nappes.

17. Unité d'affichage selon l'une des revendications précédentes, **caractérisée en ce que**
dans le cas de l'unité de sortie (2), il s'agit d'un système informatique.
